# EUROPÄISCHE PATENTSCHRIFT

(11) **EP 0 762 141 B1**
(45) Veröffentlichungstag und Bekanntmachung des Hinweises auf die Patenterteilung: **22.01.2003**
(21) Anmeldenummer: 96114033.2
(22) Anmeldetag: 03.09.1996
(51) Int. Cl.: G01S 13/93, B60Q 1/52, B60Q 1/48, B60R 16/02, G01S 15/93, B60R 16/00

(54) **Strahlungssensormodul**
Radiation sensor module
Module de senseur de radiation

(30) Priorität: 07.09.1995 DE 29514363 U
(43) Veröffentlichungstag der Anmeldung: 12.03.1997
(73) Patentinhaber: Donnelly Hohe GmbH & Co. KG, 97903 Collenberg (DE)
(72) Erfinder: Fürst, Peter, 63927 Bürgstadt (DE); Kaspar, Rudolf, 97903 Collenberg (DE)
(74) Vertreter: Zinngrebe, Horst, Dr.rer.nat.

(56) Entgegenhaltungen:
- EP-A- 0 348 691
- EP-A- 0 718 173
- GB-A- 2 040 092
- US-A- 4 926 171

## Beschreibung

Die Erfindung betrifft ein Strahlungssensormodul zum Einbau in die Karosserie eines Fahrzeuges mit einer Sensoreinheit, welche eine elektromagnetische oder Ultraschallstrahlung in einen vorbestimmten Öffnungswinkel abgeben kann.

Im Straßenverkehr ist das rechtzeitige Erkennen von Hindernissen zur Vermeidung von Unfällen unerläßlich. Um den Fahrer eines Fahrzeugs von dem unzuverlässigen Abschätzen eines Abstandes von einem Hindernis über die Rückspiegel zu entlasten, sind in Fahrzeugen Sensoreinheiten eingebaut, die in einen vorbestimmten Öffnungswinkel eine elektromagnetische oder Ultaschallstrahlung abgeben können und aus der vom Hindernis zurückkommenden Reflexionsstrahlung die Entfernung zum Hindernis zu ermitteln gestatten. Hilfreich sind solche Einrichtungen nicht nur beim Rückwärtseinparken, sondern auch beim Einschwenken aus einer Überholspur, wie beim Überholen von Lastwagen auf Autobahnen täglich beobachtet werden kann.

In dem Dokument GB-A-2 040 092 ist ein Strahlungssensormodul beschrieben, bei welchem ein Ultraschallsender und ein Ultraschallempfänger auf einer motorgetriebenen horizontalen Scheibe angeordnet sind. Die aus dem Sensor abgegebene Strahlung erfasst den vollen 180° Winkelbereich hinter dem Fahrzeug. Diese Einrichtung ist relativ aufwendig und erfasst vor allem nicht Hindernisse im hinteren seitlichen Bereich des Fahrzeuges.

In dem Dokument EP-B-348 691 wird ein Verfahren und eine Vorrichtung zur haptischen Anzeige der Abstandswarnung im Kraftfahzeug unter Verwendung von Abstandssensoren und eine Auswerteelektronik beschrieben, die die Abstandswarnung durch Erschütterung des Lenkrades, des Fahrersitzes oder der gesamten Fahrgastzelle bewirkt. Derartige Erschütterungen kann der Fahrer unmittelbar wahrnehmen, ohne dass seine Sinnesorgane speziell auf eine bestimmte Anzeige ausgerichtet werden müssen.

Demgegenüber liegt der Erfindung die Aufgabe zugrunde, den durch den Einbau zahlreicher Sensoreinheiten bedingten Aufwand zu reduzieren.

Bei dem eingangs genannten Strahlungssensormodul ist dazu erfindungsgemäß vorgesehen, dass die Sensoreinheit durch einen gesteuerten Motor in die eine oder andere von zwei zueinander querliegenden und durch feste Anfahranschläge definierten Positionen schwenkbar ist, wobei ein Gehäuse zwei zueinander querliegende strahlungsdurchlässige Fenster aufweist. Damit kann die Zahl der benötigten Sensoreinheiten auf die Hälfte reduziert werden, weil es genügt, in den hinteren Eckbereich der Karosserie links und rechts jeweils ein erfindungsgemäßes Modul einzubauen, was dann je nach Wunsch des Fahrers durch Betätigung eines ihm zugänglichen Schalters die betreffende Sensoreinheit in die gewünschte Richtung zu schwenken gestattet.

In bevorzugter Ausführungsform der Erfindung kann der Motor vom Schalthebel des Fahrzeugs gesteuert werden, weil während der Vorwärtsfahrt eine Erfassung des Raumes hinter dem Fahrzeug nicht notwendig, die Erfassung des Raums neben dem Fahrzeug jedoch erwünscht ist. Bei Einlegen des Rückwärtsgangs wird dann die Sensoreinheit in jedem Modul um 90° nach hinten verschwenkt und gibt Aufschluß über hinter dem Fahrzeug befindliche Hindernisse.

Stellt eine mit der Sensoreinheit verbundene Steuereinrichtung in dem erfindungsgemäßen Strahlungssensormodul fest, daß die Entfernung des Fahrzeugs zu einem Hindernis eine vorgegebene Grenze unterschreitet, kann in Weiterbildung der Erfindung die Steuereinrichtung einen im Fahrersitz oder im Lenkrad des Fahrzeugs eingebauten Vibrationsgeber aktivieren, so daß der Fahrer selbst bei Ablenkung seiner Aufmerksamkeit ein fühlbares Warnsignal erhält.

Weitere Ausführungsformen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:
- Fig. 1:: die Draufsicht auf ein mit den Merkmalen der Erfindung ausgestattetes Strahlungssensormodul nach Abnahme des Gehäusedeckels und in Einbausitutation in der Karosserie eines Fahrzeugs;

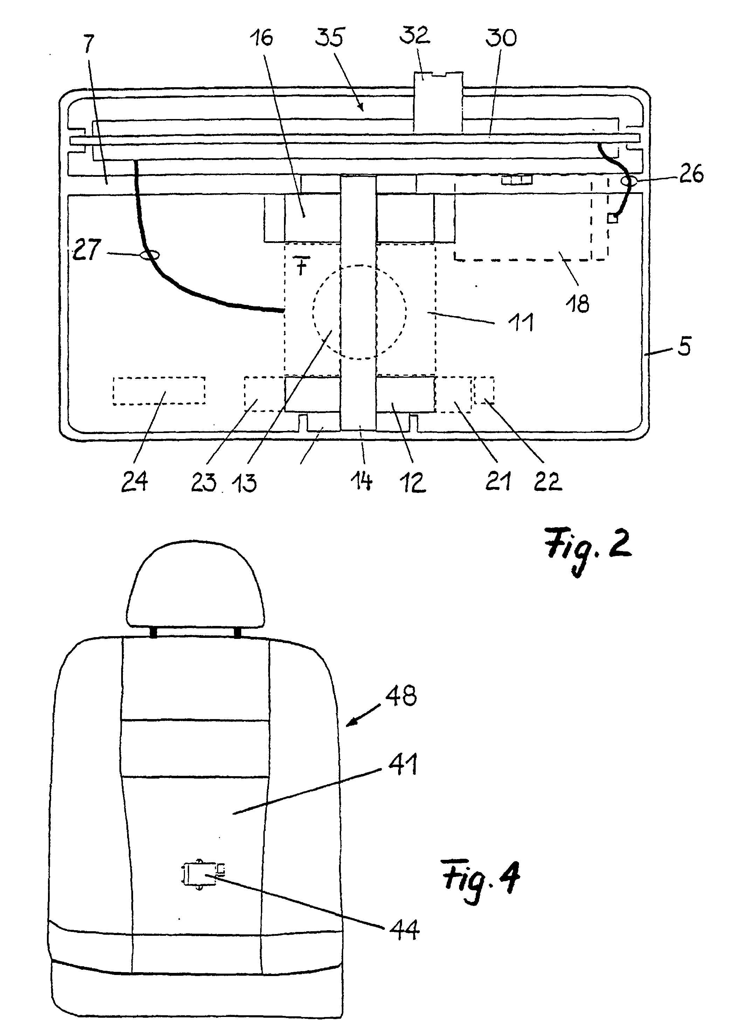

- Fig. 2:: eine Seitenansicht des Moduls nach abgenommener Frontpartie des Gehäuses;
- Fig. 3:: eine schematische Darstellung des Einbaus eines Vibrationsgebers im Lenkrad; und
- Fig. 4:: eine schematische Darstellung des Einbaus eines Vibrationsgebers im Fahrersitz.

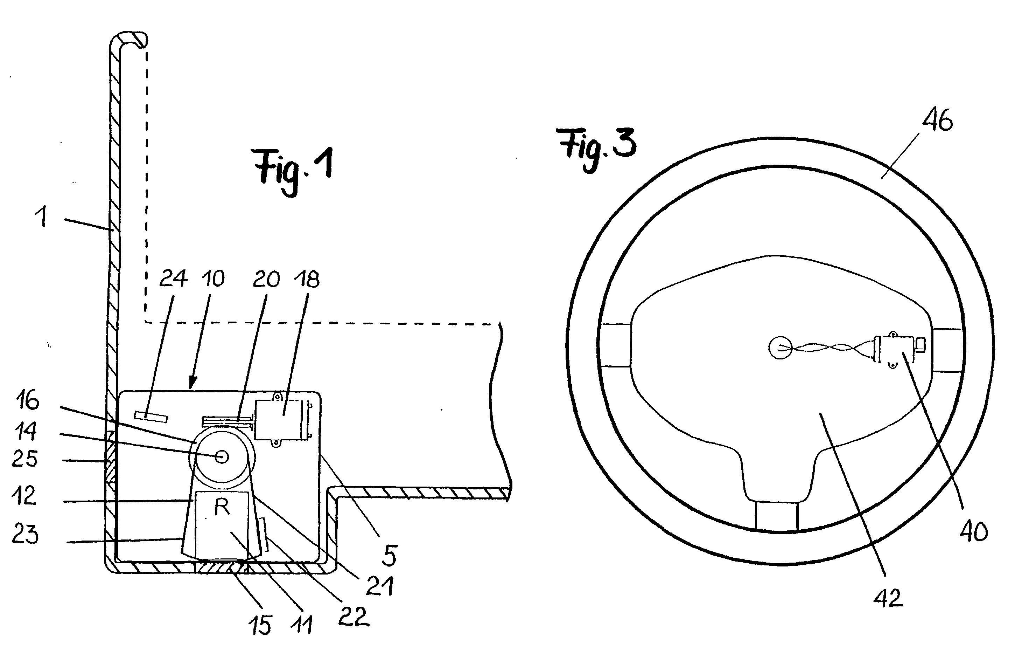

In der hinteren linken Ecke einer in Fig. 1 nur schematisch angedeuteten Karosserie 1 eines im übrigen nicht dargestellten Fahrzeugs ist ein Gehäuse 5 eines Strahlungssensormoduls eingebaut. Das im Ganzen mit 10 bezeichnete Strahlungssensormodul enthält eine an sich bekannte, hier nur als Kasten dargestellte Sensoreinheit 11, die auf einem Schwenkarm 12 gelagert ist. Der Schwenkarm 12 ist mit einer im Gehäuse 5 drehbar gelagerten Welle 14 drehfest verbunden. Ferner sitzt auf der Welle 14 drehfest ein Ritzel 16, welches mit einer auf der Abtriebswelle eines Elektromotors 18 aufgekeilten Schnecke 20 kämmt.

Die Sensoreinheit 11 besitzt eine Sende- und Empfangsfläche 13, welche der Schwenkarm 12 in seiner mit R bezeichnet, bezüglich der Fahrtrichtung nach rückwärts weisenden Position vor eine Öffnung in der Karosserie 1 hält, die von einer strahlungsdurchlässigen Platte oder Scheibe 15 staub- und wasserdicht abgeschlossen ist. Die Stellung R des Schwenkarms 12 und damit der Sensoreinheit 11 ist durch Anlage einer Seitenkante 21 des Schwenkarms gegen einen gehäusefesten Anschlag 22 definiert.

Wird der Elektromotor 18 derart aktiviert, daß seine drehende Abtriebswelle die Welle 14 mit Schwenkarm 12 und Sensoreinheit 11 um etwa 90° in Uhrzeigerrichtung bis zum Anschlag einer weiteren Kante 23 des Schwenkarms 12 an einen weiteren Anschlag 24 verschwenkt, befindet sich die Strahlungsfläche 13 der Sensoreinheit 11 vor einer weiteren Öffnung in der Karosserie 1, die mit einer weiteren strahlungsdurchlässigen Scheibe 25 verschlossen ist. Befindet sich die Sensoreinheit 11 in der relativ zur Position R um 90° in Uhrzeigerrichtung abgeschwenkten Stellung F, strahlt die Sensoreinheit die in ihr erzeugte Strahlung oder Ultraschallschwingung durch das seitliche Fenster 25 seitlich vom Fahrzeug ab, während die in Position R befindliche Sensoreinheit ihre Strahlung durch das Fenster 15 nach hinten abgibt.

Soll das Strahlungssensormodul 10 in der rechten hinteren Ecke des Fahrzeugs eingebaut werden, ist die Einbaulage des Strahlungssensormoduls 10 gegenüber der in Fig. 1 dargestellten Lage um 90° in Gegenrichtung des Uhrzeigers verdreht. Die Sensoreinheit gibt dann in einer F-Position ihre Strahlung seitlich zum Fahrzeug ab, während sie in der um 90° in Uhrzeigerrichtung verschwenkten Position R ihre Strahlung nach rückwärts emittiert.

In Fig. 1 nicht dargestellt ist eine im Gehäuse 5 über dem Elektromotor 18 und der Sensoreinheit 11 untergebrachte Schaltungsplatine 30, welche ein im Ganzen mit 35 bezeichnete Steuereinrichtung für den Elektromotor 18 sowie Stromversorgungseinrichtung für die Sensoreinheit 11 trägt. Die elektrischen Anschlüsse der Steuereinrichtung 35 für das Bordnetz des Fahrzeugs sind über eine Anschlußfahne 32 aus dem Gehäuse 5 nach außen herausgeführt. Das Gehäuse 5 besitzt einen sich quer zur Welle 14 erstreckenden Zwischenboden 7, an welchem die Welle 14 drehbar gelagert und der Motor 18 aufgehängt ist. Ein elektrisches, durch den Zwischenboden 7 hindurchgeführtes Kabel 26 verbindet die Steuereinrichtung 35 mit dem Elektromotor 18. Ein weiteres elektrisches, durch den Zwischenboden 7 hindurchgeführtes Kabel 27 verbindet die Steuereinrichtung mit der Sensoreinheit 11. In dem Kabel 27 sind auch Steueradern von der Sensoreinheit 11 zur Steuereinrichtung 35 geführt, über welche Aktivierungssignale aus der Steuereinrichtung 35 der Sensoreinheit 11 zu deren Aktivierung sowie weitere Steuersignale aus der Sensoreinheit 11, die den von der Steuereinheit 11 ermittelten relativen Abstand zum nächsten Hindernis repräsentieren, der Steuereinrichtung 35 zugeführt werden.

Nicht dargestellt sind Ausgangssignalleitungen, die einerseits über einen nicht dargestellten Stecker mit der Anschlußfahne 32 und andererseits mit einem Vibrationsgeber 40, 44 verbunden sind. Die Steuereinrichtung 35 ermittelt aus den aus der Sensoreinheit 11 empfangenen Ausgangssignalen, ob der festgestellte Abstand zum nächsten Hindernis eine vorgegebene Schwelle unterschreitet und gibt bejahendenfalls das dafür repräsentative Steuersignal über die Anschlußfahne 32 auf die erwähnten Ausgangssignalleitungen, die es dem Vibrationsgeber 40, 44 zuführen. Der Vibrationsgeber 40, 44 dient dazu, dem Fahrer durch seinen Tastsinn beeinflussende Schwingungen Handlungsbedarf zu signalisieren. Dazu ist der Vibrationsgeber 40 in den Pralltopf 42 eines Fahrzeuglenkrades 46 eingebaut und versetzt bei seiner Aktivierung das Lenkrad 46 in als Kribbeln in der Hand wahrnehmbare Vibrationen. Gemäß Fig. 4 ist der Vibrationsgeber 44 im Rückenpolster des Fahrersitzes 48 eingebaut. Auch hier vermittelt der eingebaute Vibrationsgeber 44 bei seiner Aktivierung dem Fahrer Handlungsbedarf, um die Annäherung an ein Hindernis zu beenden.

Nicht dargestellt ist ein im Zugriffsbereich des Fahrers angeordneter Schalter im Stromversorgungsweg von der Fahrzeugbatterie zu dem Elektromotor 18, durch dessen Betätigung der Fahrer den Motor 18 stillsetzen oder in der einen oder anderen gewünschten Richtung zum Drehantrieb seiner Abtriebswelle aktivieren kann.

Der Motor 18 kann zusätzlich oder alternativ auch in Abhängigkeit von der Stellung des Schalthebels des Fahrzeugs gesteuert sein. Befindet sich der Schalthebel auf Vorwärtsfahrt, kann dem Motor 18 über die Steuereinrichtung 35 ein Signal derart zugeleitet werden, welches ein Schwenken des Schwenkarms 12 vor ein Seitenfenster 25 bewirkt, so daß die von der Sensoreinheit 11 abgegebene Strahlung vom Fahrzeug zur Seite emittiert wird. Wird der Schalthebel auf Rückwärtsfahrt gelegt, erhält der Motor 18 über die Steuereinrichtung 35 ein anderes Signal, welches den Schwenkarm 12 vom Seitenfenster 25 weg zum rückwärtigen Fenster 15 verschwenken läßt, so daß die von der Sensoreinheit 11 abgegebene Strahlung sich jetzt hinter das Fahrzeug erstreckt.

## Patentansprüche

1. Strahlungssensormodul (10) zum Einbau in die Karosserie (1) eines Fahrzeuges mit einer Sensoreinheit (11), welche eine elektromagnetische oder Ultraschallstrahlung in einen vorbestimmten Öffnungswinkel abgeben kann, **dadurch gekennzeichnet, dass** die Sensoreinheit (11) durch einen gesteuerten Motor (18) in die eine (R) oder die andere (F) von zueinander querliegenden und durch feste Anfahranschläge (22, 24) definierte Positionen schwenkbar ist, wobei ein Gehäuse (5) zwei zueinander querliegende strahlungsdurchlässige Fenster (15, 25) aufweist.

2. Modul nach Anspruch 1, **dadurch gekennzeichnet, dass** der Motor (18) durch einen im Zugriffsbereich des Fahrers liegenden Schalter steuerbar ist.

3. Modul nach Anspruch 1, **dadurch gekennzeichnet, dass** der Motor (18) durch den Schalthebel des Fahrzeuges steuerbar ist.

4. Modul nach einem oder mehreren der vorstehenden Ansprüche, **dadurch gekennzeichnet, dass** die Sensoreinheit (11) auf einem Schwenkarm (12) gelagert ist, der mit einer Abtriebswelle des Motors (18) gekoppelt ist.

5. Modul nach Anspruch 4, **dadurch gekennzeichnet, dass** der Schwenkarm (12) über ein Getriebe (16, 20) mit der Abtriebswelle gekoppelt ist.

6. Modul nach einem oder mehreren der vorstehenden Ansprüche, **dadurch gekennzeichnet, dass** in dem Gehäuse eine Platine (30) mit einer Steuereinrichtung (35) für den Motor (18) und die Sensoreinheit (11) angeordnet ist.

7. Modul nach einem oder mehreren der vorstehenden Ansprüche, **dadurch gekennzeichnet, dass** im Fahrersitz ein Vibrationsgeber (44) eingebaut ist, der durch Ausgangssignale aus dem Strahlungsempfänger (11) aktivierbar ist.

8. Modul nach einem oder mehreren der Ansprüche 1-6, **dadurch gekennzeichnet, dass** im Lenkrad (46) des Fahrzeuges ein Vibrationsgeber (40) eingebaut ist, der durch Ausgangssignale aus der Sensoreinheit (11) aktivierbar ist.

9. Modul nach einem der vorstehenden Ansprüche, **dadurch gekennzeichnet, dass** der Motor derart gesteuert ist, dass bei Vorwärtsfahrt die Sensoreinheit den Raum neben dem Fahrzeug erfasst.

## Claims

1. Radiation sensor module (10) for installation in the bodywork (1) of a motor vehicle, having a sensor unit (11) which is able to emit an electromagnetic or ultrasonic radiation with a predetermined beam angle, **characterised in that** the sensor unit (11) is rotatable by a controlled motor (18) into one (R) or other (F) of positions lying mutually transverse to each other and defined by fixed travel stops (22, 24), whereby a housing (5) has two mutually transverse radiation-transparent windows (15, 25).

2. Module according to Claim 1, **characterised in that** the motor (18) is controllable by a switch lying within the reach of the driver.

3. Module according to Claim 1, **characterised in that** the motor (18) is controllable through the gear lever of the vehicle.

4. Module according to one or more of the previous claims, **characterised in that** the sensor unit (11) is mounted on a swivel arm (12) coupled to a drive shaft of the motor (18).

5. Module according to Claim 4, **characterised in that** the swivel arm (12) is coupled to the drive shaft via a gearbox (16, 20).

6. Module according to one or more of the previous claims, **characterised in that** a circuit board (30) with a control device (35) for the motor (18) and the sensor unit (11) is mounted in the housing.

7. Module according to one or more of the previous claims, **characterised in that** built into the driver seat is a vibration generator (44), which may be activated by output signals from the radiation receiver (11).

8. Module according to one or more of the claims 1 to 6, **characterised in that** built into the steering wheel (46) of the vehicle is a vibration generator (40), which may be activated through output signals from the sensor unit (11).

9. Module according to one of the previous claims, **characterised in that** the motor is controlled such that during forward travel the sensor unit detects the space adjacent to the vehicle.

## Revendications

1. Module de capteur de radiation (10) à monter dans la carrosserie (1) d'un véhicule avec une unité de capteur (11) qui peut émettre un rayonnement électromagnétique ou à ultrasons selon un angle d'ouverture prédéterminé, **caractérisé en ce qu'**un moteur sous-commande (18) permet de faire pivoter l'unité de capteur (11) dans une des positions (R) ou (F) disposées dans un sens transversal l'une par rapport à l'autre et définies par des butées fixes (22, 24), alors qu'un boîtier (5) comprend deux fenêtres perméables au rayonnement (15, 25), qui sont positionnées transversalement l'une par rapport à l'autre.

2. Module selon la revendication 1, **caractérisé en ce que** le moteur (18) peut être commandé par un interrupteur se trouvant dans la zone accessible au conducteur.

3. Module selon la revendication 1, **caractérisé en ce que** le moteur (18) peut être commandé par le levier de changement de vitesse du véhicule.

4. Module selon l'une ou plusieurs des revendications précédentes, **caractérisé en ce que** l'unité de capteur (11) est positionnée sur un bras pivotant (12) qui est accouplé à un arbre de sortie du moteur (18).

5. Module selon la revendication 4, **caractérisé en ce que** le bras pivotant (12) est accouplé à l'arbre de sortie par l'intermédiaire d'un réducteur (16, 20).

6. Module selon l'une ou plusieurs des revendications précédentes, **caractérisé en ce qu'**une platine (30) avec un dispositif de commande (35) pour le moteur (18) et l'unité de capteur (11) est disposée dans le boîtier.

7. Module selon l'une ou plusieurs des revendications précédentes, **caractérisé en ce qu'**un transmetteur de vibrations (44), qui peut être activé par des signaux de sortie provenant du récepteur de rayonnement (11), est monté dans le siège du conducteur.

8. Module selon l'une ou plusieurs des revendications 1-6, **caractérisé en ce qu'**un transmetteur de vibrations (40) qui peut être activé par des signaux de sortie provenant de l'unité de capteur (11) est monté dans le volant (46) du véhicule.

9. Module selon l'une des revendications précédentes, **caractérisé en ce que** le moteur commandé de telle manière que, lors de la circulation en marche avant, l'unité de capteur capte le volume situé à côté du véhicule.
